# EUROPÄISCHE PATENTSCHRIFT

(11) **EP 2 888 103 B1**
(45) Veröffentlichungstag und Bekanntmachung des Hinweises auf die Patenterteilung: **20.11.2019**
(21) Anmeldenummer: 13756068.6
(22) Anmeldetag: 23.08.2013
(51) Int. Cl.: B32B 5/18, B32B 27/40

(54) **SANDWICH - VERBUNDELEMENT MIT VERBESSERTEN MECHANISCHEN EIGENSCHAFEN UND VERFAHREN ZUR HERSTELLUNG**
SANDWICH COMPOUND ELEMENT WITH IMPROVED MECHANICAL PROPERTIES AND METHOD FOR MANUFACTURING SAME
ÉLÉMENT COMPOSITE EN SANDWICH AVEC DES PROPRIÉTÉS MÉCANIQUES AMÉLIORÉES ET PROCÉDÉ DE FABRICATION

(30) Priorität: 27.08.2012 EP 12181836
(43) Veröffentlichungstag der Anmeldung: 01.07.2015
(73) Patentinhaber: Covestro Deutschland AG, 51373 Leverkusen (DE)
(72) Erfinder: RIPPEL, Marc, 51375 Leverkusen (DE); ROERS, Rolf, 51519 Odenthal (DE); LÖVENICH, Catherine, 51469 Bergisch Gladbach (DE); SCHINDLER, Walter, 51399 Burscheid (DE); BÜCHELE, Michael, 86647 Buttenwiesen (DE); PFEIFFER, Lars, 55116 Mainz (DE)
(74) Vertreter: Levpat
(86) Internationale Anmeldenummer: PCT/EP2013/067573
(87) Internationale Veröffentlichungsnummer: WO 2014/033068

(56) Entgegenhaltungen:
- DE-A1- 2 461 399
- US-A- 3 496 058
- US-A1- 2005 181 196

## Beschreibung

Die vorliegende Erfindung betrifft ein Sandwich-Verbundelement mit einer ersten Deckschicht und mit einer zweiten Deckschicht, wobei zwischen der ersten Deckschicht und der zweiten Deckschicht ein Polyurethan-Schaumkernkörper angeordnet ist.

### STAND DER TECHNIK

Aus der EP 1 516 720 B1 ist ein Verfahren zur Herstellung von Sandwich-Verbundelementen bekannt, die eine erste Deckschicht und eine zweite Deckschicht aufweisen, und zwischen den Deckschichten ist ein Polyurethan-Schaumkernkörper angeordnet. Der Polyurethan-Schaumkernkörper wird durch Auftrag eines aufschäumenden Reaktionsgemisches auf eine der Deckschichten bereitgestellt. Um die Haftung zwischen dem durch das aufschäumende Reaktionsgemisch hergestellten Polyurethan-Schaumkernkörper und den Deckschichten zu verbessern, wird vorgeschlagen, auf die Innenseite der Deckschichten einen Haftvermittler auf Polyurethanbasis aufzubringen. Dieser soll eine Dichte von 400-1200 kg/m3 aufweisen, und die Dicke der Haftvermittlerschicht soll einen Wert von 50 µm bis 500 µm einhalten.

Aus der EP 2 412 526 A1 ist ein weiteres Verfahren zur Herstellung von Sandwich-Verbundelementen mit einem Aufbau bekannt, der zwei Deckschichten umfasst, zwischen denen sich ein Polyurethan-Schaumkernkörper befindet. Ebenfalls zur Verbesserung der Haftung zwischen den Deckschichten und dem Schaumkernkörper werden Möglichkeiten aufgezeigt, Haftvermittlerschichten zwischen dem Schaumkernkörper und den Deckschichten einzubringen.

Die WO 2010/076118 A1 zeigt ein Sandwich-Verbundelement umfassend zwei metallische Deckschichten und eine dazwischen angeordnete Polyurethan-Schaumschicht sowie eine Polyurethan-Kompaktschicht, die Mikrokapseln mit einem Kapselkern aus Latentwärmespeichermaterial enthält. Damit sollen die thermischen Eigenschaften des Sandwich-Verbundelementes verbessert werden.

US 3,496,058 zeigt ein Sandwich-Verbundelement umfassend eine oder zwei metallische Deckschichten und eine dazwischen angeordnete Schaumschicht sowie eine semielastomere Schicht, welche inerte Feststoffpartikel enthält. Damit sollen die Stoß- und Kerb-Eigenschaften des Sandwich-Verbundelements verbessert werden.

Grundsätzlich können Sandwich-Verbundelemente zur thermischen Isolation von Gebäuden Verwendung finden, ohne wesentliche mechanische Belastungen aufzunehmen. Neuere Gebäudekonstruktionen verwenden hingegen Sandwich-Verbundelemente, die beispielsweise zum Bau von Hallen für industrielle Zwecke die Wandelemente des Gebäudes selbst bilden. Folglich müssen die Sandwich-Verbundelemente größeren mechanischen Belastungen standhalten, um beispielsweise Winddruck- und sogkräfte aufzunehmen. Um die Sandwich-Verbundelemente hinreichend belastbar auszuführen, können diese jedoch aus konstruktiven Gründen nicht beliebig dick ausgebildet werden, zumal auch wirtschaftliche Nachteile entstehen. Bekannt sind Sandwich-Verbundelemente mit Dicken bis zu beispielsweise 25 cm, wobei das Ziel verfolgt wird, unter Beibehaltung der sehr guten thermischen Isolationseigenschaften Sandwich-Verbundelemente zur Herstellung von Gebäudewänden bereitzustellen, die eine Dicke von beispielsweise nur noch 10 cm aufweisen.

Die Sandwich-Verbundelemente können zur Bildung der Gebäudewände zwischen Stahlträgern aufgenommen werden, sodass sich eine erhebliche freie Länge der Sandwich-Verbundelemente ergibt. Stahlstützen, zwischen denen die Sandwich-Verbundelemente eingesetzt werden, können nicht beliebig große Abstände zueinander aufweisen, da nur Sandwich-Verbundelemente einer endlichen Länge verwendet werden können, was in sogenannten Stützweitentabellen erfasst ist. Windkräfte, die an den Sandwich-Verbundelementen angreifen können, dürfen nicht zu einer Überlast der Elemente führen, wobei auch Schneelasten oder das Eigengewicht der Verbundelemente bei der Bestimmung der freien Länge Berücksichtigung finden müssen. Allgemein wird aber das Ziel verfolgt, den Abstand von Stahlträger zu Stahlträger möglichst zu vergrößern, um die absolute Anzahl notwendiger Stahlträger und damit die Gerüstdichte des Gebäudes zu verringern. Beispielsweise sind Spannweiten von etwa 4 m bekannt, wenn Sandwich-Verbundelemente mit einer Dicke von beispielsweise etwa nur 10 cm Verwendung finden. Das Ziel ist es jedoch, Sandwich-Verbundelemente bereitzustellen, die bei gleichbleibender Dicke größere Spannweiten ermöglichen.

### OFFENBARUNG DER ERFINDUNG

Die Aufgabe der vorliegenden Erfindung ist es, Sandwich-Verbundelemente mit verbesserten mechanischen Eigenschaften sowie ein Verfahren zu deren Herstellung anzugeben.

Diese Aufgabe wird ausgehend von einem Sandwich-Verbundelement gemäß dem Oberbegriff des Anspruchs 1 und ausgehend von einem Verfahren gemäß den bekannten Merkmalen des Anspruchs 11 zur Herstellung eines Sandwich-Verbundelementes mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass zwischen dem Schaumkernkörper und wenigstens einer der Deckschichten eine Unterdeckschicht zur mechanischen Aussteifung des Verbindungselementes angeordnet ist.

Aus der DE 24 61 399 A1 ist ein Verbundelement bekannt, das Sandwichplatten aufweist, die nach der Bereitstellung anschließend thermoplastisch verformt werden können. Die Sandwichplatten sind mit Deckschichten bedeckt, und es wird vorgeschlagen, die Sandwichplatten aus einem Schaumkunststoff bereitzustellen, die mit einer Reaktionsmischung getränkt werden können. Unter den Deckschichten befinden sich folglich Schaumstoffbahnen, die mit Reaktionsmischung getränkt sind, sodass eine erhöhte Steifigkeit des so gebildeten Sandwichelementes erreicht wird. Eine Nutzung solcher Verbundelemente für die Gebäudetechnik ist jedoch nicht umsetzbar, da die Herstellung mehrgliedrig ist und hohe Kosten verursacht, insbesondere durch die vorherige Bereitstellung von Schaumkunststoffen, die erst anschließend durchtränkt werden. Eine anschließende Verformbarkeit des so gebildeten Sandwichelemente ist zudem nicht notwendig.

Durch die erfindungsgemäße Anordnung einer Unterdeckschicht auf der Innenseite wenigstens einer der oder auch beider Deckschichten des Sandwich-Verbundelementes wird eine mechanische Aussteifung des Verbundelementes erreicht, die insbesondere darauf beruht, dass bei einer Biegebelastung des Sandwich-Verbundelementes eine Knitter- und Faltenbildung in der Deckschicht des Verbundelementes erheblich verzögert wird, unter der die Unterdeckschicht angeordnet ist. Beispielsweise kann bei einer Biegebelastung des Verbundelementes unter derjenigen Deckschicht, die in der Biegekurve innenliegend angeordnet ist, die Unterdeckschicht vorgesehen sein. Insbesondere kann aber unter beiden Deckschichten jeweils zumindest eine Unterdeckschicht vorgesehen sein.

Gemäß einer besonders vorteilhaften Ausgestaltung der Erfindung können wenigstens eine und vorzugsweise beide Unterdeckschichten aus einem Polyurethan gebildet sein. Grundsätzlich ist der Polyurethan-Schaumkernkörper im Vergleich zum Material der Deckschichten sehr nachgiebig. Daraus ergibt sich eine nur geringe Stützwirkung für die Deckschichten in direkter Anordnung auf dem Polyurethan-Schaumkernkörper, was Weiter auf Seite 4 der ursprünglichen Beschreibung Steifigkeit, Härte und insbesondere einen höheren E-Modul aufweisen als der Polyurethan-Schaumkernkörper, so entsteht eine mechanische Stützwirkung der Deckschichten, da ein erhöhter Bettungsmodul erreicht wird. Beispielsweise kann damit die in einer Biegelinie innenliegende Deckschicht bei mechanischer Belastung des Sandwich-Verbundelementes eine wesentlich später einsetzende Knitter- und Faltenbildung aufweisen, d.h., dass diese erst bei wesentlich höheren Belastungen einsetzt. Die Knitter- und Faltenbildung äußert sich insbesondere in einer Wellenform der in einer Biegung des Verbundelementes innenliegenden Deckschicht, sodass es schnell zu einer Ablösung der Deckschicht vom Polyurethan-Schaumkernkörper kommen kann. Dabei helfen auch keine Haftvermittlerschichten, die zwar die Haftung zwischen der Deckschicht und dem Schaumkernkörper verbessern können, eine mechanische Stützwirkung kann durch die sehr dünn ausgeführten Haftvermittlerschichten jedoch nicht erreicht werden. Erst durch die Polyurethan-Unterdeckschichten, die eine höhere Steifigkeit aufweisen als der Schaumkernkörper, wird die höhere Bettungsspannung für die angrenzende Deckschicht erreicht, wodurch sich die Knitter- und Faltenwirkung der Deckschichten verzögert und somit eine verbesserte mechanische Belastbarkeit der Sandwich-Verbundelemente erreicht wird.

Ein weiterer Vorteil ergibt sich dadurch, dass für die Befestigung der Verbundelemente eine geringere Anzahl von Befestigungsmitteln verwendet werden kann. Befestigungsmittel, beispielsweise in Form von Bolzen, Nägeln, Stiften oder dergleichen, die in die Verbundelemente eingesetzt werden, können aufgrund der durch die Unterdeckschichten höheren aufnehmbaren Kräfte vorteilhafterweise in geringerer Anzahl verwendet werden.

Auch kann vorgesehen sein, dass die wenigstens eine Unterdeckschicht aus einem Polyurethan gebildet ist und wenigstens teilweise ein Glasfasermaterial, insbesondere ein Glasfasergewirk, umfasst. Das Glasfasermaterial und insbesondere das Glasfasergewirk kann dabei beispielsweise durch das Polyurethan der Unterdeckschicht durchtränkt sein, wobei auch Unterdeckschichten umfassend ein Glasfasermaterial vorgesehen sein können, die mit einem Werkstoff durchtränkt sind, der kein Polyurethan umfasst.

Neben der Steigerung der mechanischen Festigkeit der Verbundelemente nutzt die Erfindung ferner die positiven Eigenschaften einer Glasfasermatte zur Verbesserung des Brandschutzverhaltens von Sandwich-Verbundelementen. Die verbesserten Brandschutz-eigenschaften der Sandwich-Verbundelemente werden insbesondere dadurch erzielt, dass die Glasfasermatte an der Innenseite entweder der ersten oder der zweiten Deckschicht angeordnet wird. Der Grund liegt im Schmelzverhalten einer Glasfasermatte bei Hitzeeinwirkung, wodurch eine Vernetzung des faserartigen Glasmaterials erzeugt wird, und das Material des Polyurethan-Hartschaumkernkörpers wird vor direkter Flammeneinwirkung abgeschirmt, da durch die schmelzzähe Glasmasse ein Schutz des Hartschaumkernkörpers erzeugt wird. Insbesondere konnte festgestellt werden, dass eine Rissbildung im Hartschaumkernkörper verhindert oder wenigstens verzögert wird, so dass ein Durchbrand eines Sandwich-Verbundelementes mit einer erfindungsgemäß eingebrachten Glasfasermatte bei einer kontinuierlichen Beflammung verhindert oder wenigstens stark verzögert wird.

Vorzugsweise kann das Glasfasermaterial als ein Glasfasergewirk ausgebildet sein, wobei Gewirke, auch Wirkwaren genannt, aus Fadensystemen durch Maschenbildung auf einer Wirkmaschine industriell hergestellte Stoffe beschreiben und so zu den Maschenwaren gehören. Dabei können Kulierwirkwaren und Kettenwirkwaren voneinander unterschieden werden. Das als Bestandteil der Unterdeckschichten einsetzbare Glasfasergewirk kann eine Dicke aufweisen, die etwa der Dicke der Unterdeckschicht entsprechen kann, sodass die Wirkware eine dreidimensionale Struktur aufweisen kann. Die nachfolgend beschriebenen Eigenschaften der Unterdeckschichten aus Polyurethan können vorliegend auch unter Verwendung eines Glasfasermaterials vorteilhaft genutzt werden.

Mit besonderem Vorteil können die Deckschichten aus einer Metallbahn, insbesondere aus einer Stahlbahn oder aus einer Aluminiumbahn gebildet sein. Die erste und die zweite Deckschicht des Verbundelementes müssen nicht zwingend das gleiche Material aufweisen, und die erste Deckschicht kann aus einem ersten Material und die zweite Deckschicht kann aus einem sich vom ersten Material unterscheidenden zweiten Material ausgebildet sein. Beispielsweise kann das Sandwich-Verbundelement auf einer ersten Seite eine Stahlbahn und auf einer gegenüberliegenden, zweiten Seite eine Aluminiumbahn aufweisen, wobei auch Kunststoffmaterialien zur Bildung der Deckschichten Verwendung finden können. Diese Kunststoffmaterialien können beispielsweise Glasfasermaterialien oder Kohlefasermaterialien umfassen, insbesondere können allgemein faserverstärkte Kunststoffe Verwendung finden. Eine besonders vorteilhafte Auswahl an Materialien ergibt sich durch die Verwendung von Polyurethanmaterial im Verbund mit Glasfasermaterialien oder Kohlefasermaterialien.

Mit Vorteil können die Polyurethan-Unterdeckschichten eine höhere Massedichte aufweisen als die Massedichte des Polyurethan-Schaumkernkörpers. Im Vergleich zu einem Panel mit erhöhter Massedichte über dem gesamten Querschnitt wird erreicht, dass das Sandwich-Verbundelement eine geringe Gesamtmasse aufweist, die sich durch eine geringere Dichte des Polyurethan-Schaumkernkörpers ergibt. Insbesondere können die Massedichten der Polyurethan-Unterdeckschichten voneinander abweichen, sodass die Polyurethanschichten über der Dicke des gesamten Sandwich- Verbundelementes drei voneinander unterschiedliche Massedichten aufweisen können. Im Folgenden wird daher lediglich beispielhaft angegeben, dass die Massedichte der Polyurethan-Unterdeckschichten zueinander gleich und mit □2 bezeichnet sind.

Beispielsweise kann die Massedichte □1 des Polyurethan-Schaumkernkörpers 30 kg/m3 bis 60 kg/m3, vorzugsweise 35 kg/m3 bis 50 kg/m3 und besonders bevorzugt etwa 40 kg/m3 betragen. Die Massedichte der Polyurethan-Unterdeckschichten kann beispielsweise 60 kg/m3 bis 140 kg/m3, vorzugsweise 80 kg/m3 bis 120 kg/m3 und besonders bevorzugt 100 kg/m3 betragen. Folglich kann sich eine Massedichte □2 der Polyurethan-Unterdeckschichten ergeben, die einen 1,5-fachen bis 4-fachen, vorzugsweise einen 2-fachen bis 3-fachen und bevorzugt einen 2,5-fachen Wert der Massedichte □1 des Polyurethan-Schaumkernkörpers aufweist.

Ist die Unterdeckschicht mit einem Glasfasermaterial ausgeführt, können die vorbezeichneten unterschiedlichen Massedichten für die Polyurethan-Unterdeckschicht verwendet werden, jedoch kann auch vorgesehen sein, dass sich das Material und insbesondere die Massedichte der Unterdeckschichten nicht vom Polyurethan-Schaumkernkörper unterscheidet. Dann wird die festigkeitssteigernde Wirkung der Unterdeckschicht dadurch erzielt, dass das dreidimensionale Glasfasermaterial mit einer entsprechenden Dicke eine Verbesserung der mechanischen Eigenschaften bei sonst gleichbleibendem Polyurethanmaterial bewirkt. Zu bevorzugen ist jedoch eine vorstehend beschriebene Anpassung der Massedichten der Unterdeckschichten, die lediglich zusätzlich ein Glasfasermaterial umfassen können.

Gemäß einer weiteren vorteilhaften Ausführungsform des Sandwich-Verbundelementes können die Polyurethan-Unterdeckschichten eine jeweilige Dicke aufweisen, die 3% bis 20%, vorzugsweise 5% bis 15% und besonders bevorzugt 10% der Dicke des Sandwich-Verbundelementes entspricht, wobei die Dicke des Sandwich-Verbundelementes einen Wert von 30 mm bis 250 mm, vorzugsweise von 80 mm bis 120 mm und besonders bevorzugt von 100 mm aufweist. Gemäß einem möglichen vorteilhaften Ausführungsbeispiel kann das Sandwich-Verbundelement somit einer Gesamtdicke von 100 mm aufweisen, wobei der Polyurethan-Schaumkernkörper eine Dicke von 80 mm aufweist, und wobei die Polyurethan-Unterdeckschichten jeweils eine Dicke von 10 mm aufweisen können, jedoch können die Dicken der Unterdeckschichten auch voneinander abweichen, wobei sich die Unterdeckschichten insbesondere auch in ihren chemischen oder stofflichen Eigenschaften voneinander unterscheiden können. Die Dicke der Deckschichten wird dabei vernachlässigt, die je nach Ausführung des Sandwich-Verbundelementes einen Wert von beispielsweise 0,2 bis 5 mm beträgt.

Mit weiterem Vorteil können der Polyurethan-Schaumkernkörper und die Polyurethan-Unterdeckschichten jeweils aus einem aufschäumenden Reaktionsgemisch gebildet und wenigstens aus den zusammengeführten Mischkomponenten Isocyanat und Polyol bereitgestellt werden, wodurch ein PUR- und/oder ein PIR-Hartschaummaterial gebildet wird. Beispielsweise können der Polyurethan-Schaumkernkörper und die Polyurethan-Unterdeckschichten die gleiche chemische Zusammensetzung aufweisen, wobei zum Herstellen der Schichten aus Reaktionsgemischen verschiedene Treibmittelmengen verwendet werden. Somit kann das Reaktionsgemisch zur Bildung der Polyurethan-Unterdeckschicht mit einer geringeren Treibmittelmenge geschäumt werden als das Reaktionsgemisch zur Bildung des Polyurethan-Schaumkernkörpers. Je höher die Treibmittelmenge ist, die dem Reaktionsgemisch zur Aufschäumung beigegeben wird, desto geringer ist die Dichte, die sich für den gebildeten Schaumkörper ergibt.

Zur Verbesserung der Haftung der Deckschichten an den Polyurethan-Unterdeckschichten kann nur unter einer oder unter beiden Unterdeckschichten jeweils eine Haftvermittlerschicht vorgesehen werden, die ebenfalls auf Polyurethan-Basis hergestellt sein kann. Die Haftvermittlerschichten können zwischen den Deckschichten und den Unterdeckschichten angeordnet werden, die im kontinuierlichen Herstellungsverfahren auf die jeweiligen Innenseiten aufgebracht werden, mittels geeigneter Auftragsmethoden, beispielsweise mittels Drehteller.

Der Polyurethan- Schaumkernkörper und die Polyurethan-Unterdeckschichten können jeweils aus einem aufschäumenden Reaktionsgemisch gebildet und wenigstens aus den zusammengeführten Mischkomponenten Isocyanat und Polyol bereitgestellt werden und ein PUR- und/oder ein PIR- Hartschaummaterial bilden. Das Reaktionsgemisch zur Bildung der Polyurethan-Unterdeckschichten kann dabei mit einer geringeren Treibmittelmenge geschäumt sein als das Reaktionsgemisch zur Bildung des Polyurethan- Schaumkernkörpers.

Die aufschäumenden Reaktionsgemische können wenigstens mit den zusammengeführten Mischkomponenten Isocyanat und Polyol gebildet sein, wobei der Polyurethan-Hartschaumkernkörper ein PUR- oder ein PIR-Hartschaummaterial umfasst und wobei dem Reaktionsgemisch Flammschutzmittel, insbesondere brom- und chlorhaltige Polyole oder Phosphorverbindungen wie Ester der Orthophosphorsäure und der Metaphosphorsäure, insbesondere enthaltend Halogen, zugesetzt sein können.

Die aufschäumenden Reaktionsgemische können wenigstens aus den Komponenten Polyol und Isocyanat gebildet sein. Als dem aufschäumenden Reaktionsgemisch aus der Isocyanatkomponente und der Polyolkomponente zugesetzte Treibmittel können Kohlenwasserstoffe, z. B. die Isomeren des Pentans oder Fluorkohlenwasserstoffe, z.B. HFC 245fa (1,1,1,3,3-Pentafluorpropan), HFC 365mfc (1,1,1,3,3-Penta-fluorbutan) oder deren Mischungen mit HFC 227ea (Heptafluorpropan), verwendet werden. Es können auch verschiedene Treibmittelklassen kombiniert werden. Als dem aufschäumenden Reaktionsgemisch aus der Isocyanat- und der Polyolkomponente zugesetzte Co-Treibmittel können Wasser und/oder Ameisensäure oder andere organische Carbonsäuren eingesetzt werden.

Den aufschäumenden PUR-PIR- Reaktionsgemischen können Flammschutzmittel, bevorzugt in einer Menge von 5 bis 35 Massen-% bezogen auf die Gesamtmasse an Verbindungen mit gegenüber Isocyanatgruppen reaktiven Wasserstoffatomen in der Polyolkomponente zugesetzt sein. Die Flammschutzmittel können beispielsweise brom- und chlorhaltige Polyole oder Phosphorverbindungen wie die Ester der Orthophosphorsäure und der Metaphosphorsäure sein, die ebenfalls Halogen enthalten können. Bevorzugt können bei Raumtemperatur flüssige Flammschutzmittel gewählt werden.

Den aufschäumenden Reaktionsgemischen aus der Isocyanat- und der Polyolkomponente können Katalysatoren zugesetzt sein. Beispiele für Katalysatoren können sein: Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff N-Methyl-morpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-dimethylaminopropyl)-s-hexahydrotriaz.in, Tetramethylammoniumhydroxid, Natriumacetat, Natriumoctoat, Kaliumacetat, Kaliumoctoat, Natriumhydroxid oder Gemische dieser Katalysatoren.

Den aufschäumenden Reaktionsgemischen aus der Isocyanat- und der Polyolkomponente können ferner Schaumstabilisatoren zugesetzt werden, bevorzugt Polyethersiloxane. Diese Verbindungen können so aufgebaut sein, dass ein Copolymerisat aus Ethylenoxid und Propylenoxid mit einem Polydimethylsiloxanrest verbunden ist.

Ein Zusatz von Hilfs- und Zusatzstoffen, Katalysatoren und dergleichen zum aufschäumenden Reaktionsgemisch kann vor oder während der Vermischung der Polyol- und Isocyanat-Komponenten zugeführt werden.

Die vorliegende Erfindung richtet sich ferner auf ein Verfahren zur Herstellung eines Sandwich- Verbundelementes mit einer ersten Deckschicht und mit einer zweiten Deckschicht, wobei zwischen der ersten Deckschicht und der zweiten Deckschicht ein Polyurethan- Schaumkernkörper angeordnet wird, und wobei die Deckschichten kontinuierlich einer Doppelband-Transportanlage zugeführt werden, wobei das Verfahren wenigstens die folgenden Schritte aufweist:
- Aufbringen eines aufschäumenden Reaktionsgemisches auf wenigstens eine der Deckschichten zur Bildung einer festigkeitssteigernden Unterdeckschicht,
- Aufbringen eines aufschäumenden Reaktionsgemisches auf zumindest eine Unterdeckschicht oder auf die Innenseite einer der Deckschichten, um den Polyurethan-Schaumkernkörper zu bilden.

Das Verfahren kann dabei so ausgeführt werden, dass auch auf jede der Deckschichten eine Unterdeckschicht aufgebracht wird, die aus einem Polyurethan gebildet sein kann und die beispielsweise zusätzlich ein Glasfasermaterial umfassen kann. Die Ausführungen, Merkmale und Vorteile des vorstehend beschriebenen erfindungsgemäßen Verbundelementes können für das vorliegende Verfahren ebenfalls Berücksichtigung finden.

Das wenigstens eine Reaktionsgemisch kann aus den vorzugsweise mit einem Mischkopf zusammengeführten Mischkomponenten Isocyanat und Polyol ausgebildet werden und einen PUR- und/oder einen PIR- Schaum bilden. Das Reaktionsgemisch kann dabei beispielsweise mit wenigstens einem Sprühkopf oder mit einer ruhenden oder oszillierenden Gießharke aufgebracht werden.

Den Reaktionsgemischen zur Bildung der Polyurethan- Unterdeckschichten können jeweils getrennte Mischköpfe und Gießharken oder Sprühköpfe zum separaten Auftrag auf die Innenseiten der Deckschichten zugeordnet sein, ebenso kann dem Reaktionsgemisch für den Polyurethan- Schaumkernkörper ein separater Mischkopf zugeordnet sein. Dem Reaktionsgemisch zur Bildung der Polyurethan-Unterdeckschichten kann dabei eine geringere Treibmittelmenge zugegeben werden als die Treibmittelmenge, die dem Reaktionsgemisch zur Bildung des Polyurethan-Schaumkernkörpers zugegeben wird. Dadurch stellt sich eine geringere Dichte des Polyurethan- Schaumkerns gegenüber den Polyurethan- Unterdeckschichten ein. Die verwendeten Mischkomponenten Isocyanat und Polyol können dabei für den Polyurethan- Schaumkernkörper und für die Polyurethan- Unterdeckschichten gleich ausgebildet sein und ein PUR- und/oder ein PIR- Schaum umfassen.

Gemäß einer noch weiteren Ausführungsform des Verfahrens zur Herstellung eines Sandwich- Verbundelementes kann vor dem Aufbringen des aufschäumenden Reaktionsgemisches auf die erste Deckschicht zur Bildung der ersten Polyurethan-Unterdeckschicht und/oder vor dem Aufbringen des aufschäumenden Reaktionsgemisches auf die zweite Deckschicht zur Bildung der zweiten Polyurethan-Unterdeckschicht auf die wenigstens eine Deckschicht eine Haftvermittlerschicht aufgebracht werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein Ausführungsbeispiel eines erfindungsgemäßen Sandwich-Verbundelementes,
- Figur 2: das Ausführungsbeispiel des Sandwich-Verbundelementes gemäß Figur 1, wobei zwischen den Deckschichten und den Polyurethan-Unterdeckschichten jeweils eine Haftvermittlerschicht gezeigt ist,
- Figur 2a: einen vergrößerten Ausschnitt aus Figur 2 und
- Figur 3: eine schematische Darstellung eines Ausführungsbeispiels einer Vorrichtung zur Herstellung von Sandwich-Verbundelementen mit den Merkmalen der vorliegenden Erfindung.

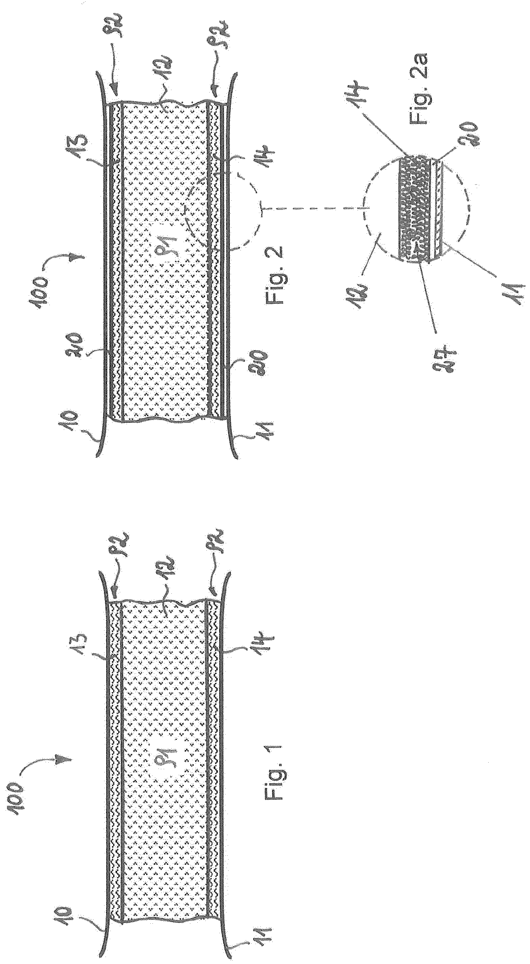

Figur 1 zeigt ein Sandwich-Verbundelement 100 mit einer ersten Deckschicht 10 und einer zweiten Deckschicht 11, wobei die erste Deckschicht 10 als Oberdeckschicht und die zweite Deckschicht 11 als Unterdeckschicht dargestellt ist. Zwischen der Oberdeckschicht und der Unterdeckschicht ist ein Polyurethan-Schaumkernkörper 12 angeordnet. Beispielhaft ist unter beiden Deckschichten 10 und 11 eine Unterdeckschicht 13, 14 vorgesehen, wobei auch nur unter einer der Deckschichten 10 oder 11 eine Unterdeckschicht 13 bzw. 14 vorgesehen sein kann. Weiterhin lediglich beispielhaft sind die Unterdeckschichten 13 und 14 als Polyurethanschichten mit den zuvor beschriebenen Eigenschaften ausgeführt. Somit ist zwischen dem Schaumkernkörper 12 und der ersten, oberen Deckschicht 10 eine erste Polyurethan-Unterdeckschicht 13 und zwischen dem Schaumkernkörper 12 und der unteren, zweiten Deckschicht 11 ist eine weitere Polyurethan-Unterdeckschicht 14 zur beidseitigen mechanischen Aussteifung des Verbindungselementes 100 angeordnet, wobei die Polyurethan-Unterdeckschichten 13 und 14 ohne Glasfasermaterial gezeigt sind. Die Unterdeckschichten 13 und 14 sind mit einer Massedichte ρ2 angegeben, wohingegen der Polyurethan-Schaumkernkörper 12 eine Massedichte ρ1 aufweist. Die Massedichte ρ1 des Schaumkernkörpers 12 beträgt beispielhaft 40 kg/m3, und die Massedichte ρ2 der Polyurethan-Unterdeckschichten 13 und 14 beträgt beispielhaft 100 kg/m3, sodass sich eine 2,5-fache Massedichte der Unterdeckschichten 13, 14 gegenüber dem Schaumkernkörper 12 ergibt. Das gezeigte Ausführungsbeispiel des Sandwich-Verbundelementes 100 weist eine Gesamtdicke von 100 mm auf, wobei die Dicke des Polyurethan-Schaumkernkörpers 12 beispielhaft 80 mm beträgt. Somit ergibt sich eine Dicke der Unterdeckschichten 13 und 14 von jeweils 10 mm.

Figur 2 zeigt das Ausführungsbeispiel des Sandwich-Verbundelementes 100 gemäß Figur 1 mit einer ersten Deckschicht 10 und einer zweiten Deckschicht 11, wobei zwischen den Deckschichten 10 und 11 ein Polyurethan-Schaumkernkörper 12 angeordnet ist. Zwischen dem Polyurethan-Schaumkernkörper 12 und den Deckschichten 10 und 11 sind Polyurethan-Unterdeckschichten 13 und 14 gezeigt, wobei ρ1 wieder die Massedichte des Polyurethan-Schaumkernkörpers 12 und ρ2 die Massedichte der Polyurethan-Unterdeckschichten 13 und 14 angibt, die beispielhaft gleich ausgebildet sind und alternativ auch unterschiedlich sein können.

Zwischen der Polyurethan-Unterdeckschicht 13 und der oberen, ersten Deckschicht 10 ist eine erste Haftvermittlerschicht 20 angeordnet, und zwischen der zweiten Polyurethan-Unterdeckschicht 14 und der unteren, zweiten Deckschicht 11 ist eine weitere Haftvermittlerschicht 20 gezeigt. Durch die Haftvermittlerschichten 20 wird erreicht, dass die Haftung der Deckschichten 10 und 11 an den Unterdeckschichten 13 und 14 verbessert wird.

In Figur 2a ist ein vergrößerter Ausschnitt aus Figur 2 aus dem Bereich der unteren, zweiten Deckschicht 11 und der sich unter der Deckschicht 11 befindenden Polyurethan- Unterdeckschicht 14 gezeigt. Weiterhin ist die Haftvermittlerschicht 20 als Schicht zwischen der Deckschicht 11 und der Polyurethan- Unterdeckschicht 14 dargestellt. Die Polyurethan- Unterdeckschicht 14 umfasst beispielhaft und stellvertretend auch für die Polyurethan-Unterdeckschicht 13 ein Glasfasergewirk 27, das mit dem Polyurethan der Unterdeckschicht 14 durchtränkt ist.

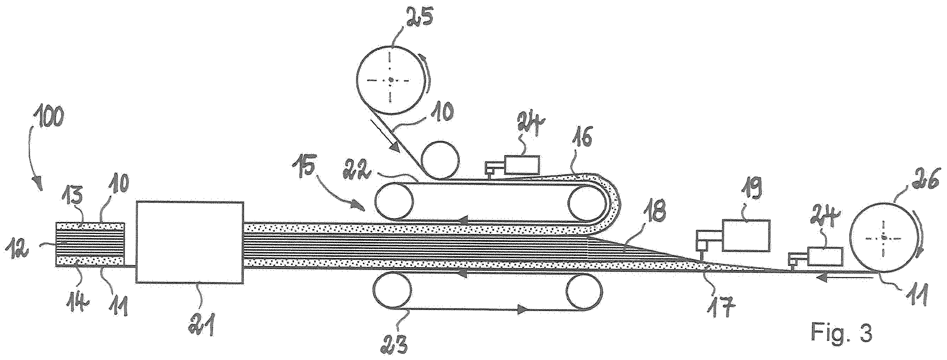

Figur 3 zeigt eine Vorrichtung zum Betrieb eines Verfahrens, das zur Herstellung von Sandwich-Verbundelementen 100 gemäß dem in Figur 1 gezeigten Ausführungsbeispiel der Erfindung dient. Das Verfahren wird mit einer Vorrichtung betrieben, die im Wesentlichen aus einer Doppelband-Transportanlage 15 besteht. Die Doppelband-Transportanlage 15 weist ein Obertransportband 22 und ein Untertransportband 23 auf, und die Transportbänder 22 und 23 rotieren in gezeigter Pfeilrichtung mit jeweils gleicher Geschwindigkeit. Zwischen den Transportbändern 22 und 23 erstreckt sich ein Spalt, und in den Spalt wird eine erste Deckschicht 10 und eine zweite Deckschicht 11 eingezogen, wobei die obere, erste Deckschicht 10 entlang des Obertransportbandes 22 und die zweite Deckschicht 11 entlang des Untertransportbandes 23 geführt ist.

Die erste Deckschicht 10 wird von einer ersten Deckschichtrolle 25 und die zweite Deckschicht 11 von einer zweiten Deckschichtrolle 26 abgewickelt, sodass sich bei Betrieb der Doppelband-Transportanlage 15 eine Bewegung der Deckschichten 10 und 11 sowie der Deckschichtrollen 25 und 26 in den gezeigten Pfeilrichtungen ergibt.

Mit einem ersten Mischkopf 24 wird ein aufschäumendes Reaktionsgemisch 17 auf die Innenseite der zweiten Deckschicht 11 aufgetragen, welches anschließend aufschäumt und die Polyurethan-Unterdeckschicht 14 bildet, die innenseitig an der zweiten Deckschicht 11 angeordnet ist. Auf das sich noch im Aufschäumen befindende oder auf das bereits ausgeschäumte Reaktionsgemisch 17 wird mit einem weiteren Mischkopf 19 ein Reaktionsgemisch 18 aufgebracht, das anschließend aufschäumt und den Polyurethan-Schaumkernkörper 12 bildet. Auf die Innenseite der ersten Deckschicht 10 wird mit einem weiteren Mischkopf 24 ein aufschäumendes Reaktionsgemisch 16 aufgetragen, das anschließend aufschäumt, während dieses in den Spalt zwischen den Deckschichten 10 und 11 einläuft und mit dem aufschäumenden oder bereits ausgeschäumten Reaktionsgemisch 18 in Kontakt gelangt. Das aufschäumende Reaktionsgemisch 16 bildet folglich die Polyurethan-Unterdeckschicht 13, die unterseitig der ersten Deckschicht 10 angeordnet ist.

Alternativ zu einem Auftragen des Reaktionsgemisches 16 auf die Innenseite der oberen Deckschicht 10 kann dieses auch gegen die Unterseite der oberen Deckschicht 10 per Sprühverfahren in Überkopf-Anordnung aufgetragen werden, um anschließend die erste Deckschicht 10 der Doppelband-Transportanlage 15 zuzuführen.

Während beziehungsweise nach Durchlauf der Deckschichten 10 und 11 mit dem zwischen diesen befindlichen Schaumkernkörper 12 und den Unterdeckschichten 13 und 14 kann mit einer Vereinzelungseinrichtung 21 der Sandwich-Verbund in einzelne Sandwich-Verbundelemente 100 vereinzelt werden. Diese weisen sodann einen Aufbau auf, wie dieser in Figur 1 gezeigt ist.

In nicht näher gezeigter Weise kann vor dem Auftragen des Reaktionsgemisches 17 auf die Innenseite der zweiten Deckschicht 11 mit dem Mischkopf 24 eine Haftvermittlerschicht auf die zweite Deckschicht 11 aufgetragen werden, ebenso kann vor dem Auftrag des Reaktionsgemisches 16 auf die Innenseite der ersten Deckschicht 10 mit dem Mischkopf 24 eine weitere Haftvermittlerschicht auf die Innenseite der ersten Deckschicht 10 aufgetragen werden, um ein Sandwich-Verbundelement 100 gemäß dem Ausdehnungsbeispiel in Figur 2 mit der gezeigten Anlage herzustellen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 100: Sandwich- Verbundelement

- 10: erste Deckschicht
- 11: zweite Deckschicht
- 12: Polyurethan- Schaumkernkörper
- 13: Polyurethan- Unterdeckschicht
- 14: Polyurethan- Unterdeckschicht
- 15: Doppelband- Transportanlage
- 16: Reaktionsgemisch
- 17: Reaktionsgemisch
- 18: Reaktionsgemisch
- 19: Mischkopf
- 20: Haftvermittlerschicht
- 21: Vereinzelungseinrichtung
- 22: Obertransportband
- 23: Untertransportband
- 24: Mischkopf
- 25: erste Deckschichtrolle
- 26: zweite Deckschichtrolle
- 27: Glasfasergewirk
- ρ1: Massedichte des Polyurethan- Schaumkernkörpers
- ρ2: Massedichte der Polyurethan- Unterdeckschicht

## Patentansprüche

1. Sandwich- Verbundelement (100) mit einer ersten Deckschicht (10) und mit einer zweiten Deckschicht (11), wobei zwischen der ersten Deckschicht (10) und der zweiten Deckschicht (11) ein Polyurethan- Schaumkernkörper (12) angeordnet ist,
**dadurch gekennzeichnet, dass**
- zwischen dem Schaumkernkörper (12) und wenigstens einer der Deckschichten (10, 11) eine Unterdeckschicht (13, 14) zur mechanischen Aussteifung des Verbundelementes (100) angeordnet ist, wobei die Aussteifung durch eine Stützwirkung auf die Deckschicht (10, 11) aufgrund eines gegenüber einer Ausbildung ohne Polyurethan-Unterdeckschicht (13, 14) erhöhten Bettungsmoduls erreicht wird, indem
- die wenigstens eine Unterdeckschicht (10, 11) aus einem Polyurethan gebildet ist und wobei die Polyurethan-Unterdeckschicht (13, 14) eine höhere Massedichte (ρ2) aufweist als die Massedichte (ρ1) des Polyurethan- Schaumkernkörpers (12), wobei
- die zumindest eine Unterdeckschicht (13, 14) aus einem ersten Reaktionsgemisch (16, 17) mit einem ersten Mischkopf (24) und Gießharke oder Sprühkopf getrennt aufgetragen ist von einem zweiten Reaktionsgemisch (18) mit einem zweiten Mischkopf (19) und Gießharke oder Sprühkopf zur Bildung des Polyurethan-Schaumkernkörpers (12) und wobei
- das Reaktionsgemisch (16, 17) zur Bildung der Polyurethan-Unterdeckschichten (13, 14) mit einer geringeren Treibmittelmenge geschäumt ist als das Reaktionsgemisch (18) zur Bildung des Polyurethan- Schaumkernkörpers (12) und wobei
- die Polyurethan-Unterdeckschicht (13, 14) eine Dicke aufweist, die 3% bis 20% der Dicke des Sandwich- Verbundelementes (100) entspricht, wobei die Dicke des Sandwich- Verbundelementes (100) einen Wert von 30mm bis 250mm aufweist.

2. Sandwich- Verbundelement (100) nach Anspruch 1, **dadurch gekennzeichnet, dass** wenigstens eine und vorzugsweise beide Unterdeckschichten (10, 11) wenigstens teilweise ein Glasfasermaterial, insbesondere ein Glasfasergewirk (27) umfassen.

3. Sandwich- Verbundelement (100) nach Anspruch 1 oder 2, **dadurch gekennzeichnet, dass** die erste Deckschicht (10) und/oder die zweite Deckschicht (11) aus einer Metallbahn, insbesondere aus einer Stahlbahn oder aus einer Aluminiumbahn gebildet ist.

4. Sandwich- Verbundelement (100) nach einem der vorgenannten Ansprüche, **dadurch gekennzeichnet, dass** die Massedichte (ρ1) des Polyurethan- Schaumkernkörpers (12) 30kg/m3 bis 60kg/m3, vorzugsweise 35kg/m3 bis 50kg/m3 und besonders bevorzugt 40kg/m3 beträgt, wobei die Massedichte (ρ2) der Polyurethan-Unterdeckschichten (13, 14) 60kg/m3 bis 140kg/m3, vorzugsweise 80kg/m3 bis 120kg/m3 und besonders bevorzugt 100kg/m3 beträgt.

5. Sandwich- Verbundelement (100) nach einem der vorgenannten Ansprüche, **dadurch gekennzeichnet, dass** die Massedichte (ρ2) der Polyurethan-Unterdeckschichten (13, 14) der 1,5-fachen bis 4-fachen, vorzugsweise der 2-fachen bis 3-fachen und besonders bevorzugt der 2,5-fachen Massedichte (ρ1) des Polyurethan- Schaumkernkörpers (12) beträgt.

6. Sandwich- Verbundelement (100) nach einem der vorgenannten Ansprüche, **dadurch gekennzeichnet, dass** die Polyurethan-Unterdeckschichten (13, 14) eine jeweilige Dicke aufweisen, die 5% bis 15% und bevorzugt 10% der Dicke des Sandwich-Verbundelementes (100) entspricht, wobei die Dicke des Sandwich- Verbundelementes (100) einen Wert von 80mm bis 120mm und bevorzugt von 100mm aufweist.

7. Sandwich- Verbundelement (100) nach einem der vorgenannten Ansprüche, **dadurch gekennzeichnet, dass** der Polyurethan- Schaumkernkörper (12) und die Polyurethan-Unterdeckschichten (13, 14) jeweils aus einem aufschäumenden Reaktionsgemisch (16, 17, 18) gebildet und insbesondere wenigstens aus den zusammengeführten Mischkomponenten Isocyanat und Polyol bereitgestellt sind und vorzugsweise ein PUR- und/oder ein PIR- Hartschaummaterial bilden.

8. Sandwich- Verbundelement (100) nach einem der vorgenannten Ansprüche, **dadurch gekennzeichnet, dass** zwischen den Deckschichten (10, 11) und den Polyurethan-Unterdeckschichten (13, 14) eine Haftvermittlerschicht (20) angeordnet ist.

9. Verfahren zur Herstellung eines Sandwich- Verbundelementes (100) mit einer ersten Deckschicht (10) und mit einer zweiten Deckschicht (11), wobei zwischen der ersten Deckschicht (10) und der zweiten Deckschicht (11) ein Polyurethan- Schaumkernkörper (12) angeordnet wird, und wobei die Deckschichten (10, 11) kontinuierlich einer Doppelband-Transportanlage (15) zugeführt werden, wobei das Verfahren wenigstens die folgenden Schritte aufweist:
- Aufbringen eines aufschäumenden Reaktionsgemisches (16, 17) auf wenigstens eine Deckschicht (10, 11) zur Bildung einer festigkeitssteigernden Unterdeckschicht (13, 14),
- separates Aufbringen eines aufschäumenden Reaktionsgemisches (18) auf eine Unterdeckschicht (13, 14) oder auf die Innenseite einer der Deckschichten (10, 11), um den Polyurethan- Schaumkernkörper (12) zu bilden, wobei
- die Polyurethan-Unterdeckschicht (13, 14) so ausgebildet wird, dass diese eine Dicke aufweist, die 3% bis 20% der Dicke des Sandwich- Verbundelementes (100) entspricht, wobei die Dicke des Sandwich- Verbundelementes (100) mit einem Wert von 30mm bis 250mm ausgebildet wird.

10. Verfahren nach Anspruch 9, **dadurch gekennzeichnet, dass** das wenigstens eine Reaktionsgemisch (16, 17, 18) aus den vorzugsweise mit einem Mischkopf (19, 24) zusammengeführten Mischkomponenten Isocyanat und Polyol ausgebildet wird und ein PUR- und/oder ein PIR- Schaum gebildet wird.

11. Verfahren nach Anspruch 9 oder 10, **dadurch gekennzeichnet, dass** den Reaktionsgemischen (16, 17) zur Bildung der Polyurethan- Unterdeckschichten (13, 14) eine geringere Treibmittelmenge zugegeben wird als die Treibmittelmenge, die dem Reaktionsgemisch (18) zur Bildung des Polyurethan- Schaumkernkörpers (12) zugegeben wird.

12. Verfahren nach Anspruch 9 bis 11, **dadurch gekennzeichnet, dass**
- vor dem Aufbringen des aufschäumenden Reaktionsgemisches (16) auf die erste Deckschicht (10) zur Bildung der ersten Polyurethan- Unterdeckschicht (13) und/oder
- vor dem Aufbringen des aufschäumenden Reaktionsgemisches (17) auf die zweite Deckschicht (11) zur Bildung der zweiten Polyurethan- Unterdeckschicht (14) auf die wenigstens eine Deckschicht (10, 11) eine Haftvermittlerschicht (20) aufgebracht wird.

13. Verfahren nach Anspruch 9 bis 12, **dadurch gekennzeichnet, dass**
- wenigstens einer der Unterdeckschichten (13, 14) ein Glasfasermaterial (27) zugegeben oder diese aus einem Glasfasermaterial (27) gebildet wird.

## Claims

1. Sandwich composite element (100) with a first outer layer (10) and with a second outer layer (11) with, arranged between the first outer layer (10) and the second outer layer (11), a polyurethane foam core (12), **characterized in that**
- arranged between the foam core (12) and at least one of the outer layers (10, 11) there is a sub-outer layer (13, 14) for mechanical reinforcement of the composite element (100), where the reinforcement is achieved via a supported effect on the outer layer (10, 11) by virtue of a modulus of subgrade reaction greater than that of a configuration without polyurethane sub-outer layer (13, 14), **in that**
- the at least one sub-outer layer (10, 11) is composed of a polyurethane where the density (ρ2) of the polyurethane sub-outer layer (13, 14) is higher than the density (ρ1) of the polyurethane foam core (12), where
- the at least one sub-outer layer (13, 14) made of a first reaction mixture (16, 17) has been applied by a first mixing head (24) and rake applicator or spray head separately from a second reaction mixture (18) applied by a second mixing head (19) and rake applicator or spray head to form the polyurethane foam core (12), and where
- the reaction mixture (16, 17) to form the polyurethane sub-outer layers (13, 14) has been foamed with a smaller quantity of blowing agent than the reaction mixture (18) to form the polyurethane foam core (12), and where
- the thickness of the polyurethane sub-outer layer (13, 14) is 3% to 20% of the thickness of the sandwich composite element (100), where the thickness of the sandwich composite element (100) is 30 mm to 250 mm.

2. Sandwich composite element (100) according to Claim 1, **characterized in that** at least one, and preferably both, sub-outer layer(s) (10, 11) comprise(s) at least to some extent a glass-fibre material, in particular a knitted glass-fibre fabric (27) .

3. Sandwich composite element (100) according to Claim 1 or 2, **characterized in that** the first outer layer (10) and/or the second outer layer (11) is/are composed of a metal web, in particular of a steel web or of an aluminium web.

4. Sandwich composite element (100) according to any of the preceding claims, **characterized in that** the density (ρ1) of the polyurethane foam core (12) is 30 kg/m³ to 60 kg/m³, preferably 35 kg/m³ to 50 kg/m³ and particularly preferably 40 kg/m³, where the density (ρ2) of the polyurethane sub-outer layers (13, 14) is 60 kg/m³ to 140 kg/m³, preferably 80 kg/m³ to 120 kg/m³ and particularly preferably 100 kg/m³.

5. Sandwich composite element (100) according to any of the preceding claims, **characterized in that** the density (ρ2) of the polyurethane sub-outer layers (13, 14) is 1.5 times to 4 times, preferably 2 times to 3 times and particularly preferably 2.5 times, the density (ρ1) of the polyurethane foam core (12).

6. Sandwich composite element (100) according to any of the preceding claims, **characterized in that** the respective thickness of the polyurethane sub-outer layers (13, 14) is 5% to 15%, and preferably 10%, of the thickness of the sandwich composite element (100), where the thickness of the sandwich composite element (100) is 80 mm to 120 mm, and preferably 100 mm.

7. Sandwich composite element (100) according to any of the preceding claims, **characterized in that** the polyurethane foam core (12) and the polyurethane sub-outer layers (13, 14) are respectively composed of a foaming reaction mixture (16, 17, 18) and in particular have been provided at least of the combined mixture components isocyanate and polyol, and preferably form a rigid PUR foam material and/or a rigid PIR foam material.

8. Sandwich composite element (100) according to any of the preceding claims, **characterized in that** arranged between the outer layers (10, 11) and the polyurethane sub-outer layers (13, 14) there is an adhesion-promoter layer (20).

9. Process for the production of a sandwich composite element (100) with a first outer layer (10) and with a second outer layer (11), where a polyurethane foam core (12) is arranged between the first outer layer (10) and the second outer layer (11), and where the outer layers (10, 11) are introduced continuously into a twin-belt transport system (15) and the process comprises at least the following steps:
- application of a foaming reaction mixture (16, 17) to at least one outer layer (10, 11) to form a strengthening sub-outer layer (13, 14),
- separate application of a foaming reaction mixture (18) to a sub-outer layer (13, 14) or to the internal side of one of the outer layers (10, 11) in order to form the polyurethane foam core (12), where
- the polyurethane sub-outer layer (13, 14) is configured with a thickness that is 3% to 20% of the thickness of the sandwich composite element (100), where the thickness of the sandwich composite element (100) is 30 mm to 250 mm.

10. Process according to Claim 9, **characterized in that** the at least one reaction mixture (16, 17, 18) is configured from the mixture components isocyanate and polyol, preferably combined by a mixing head (19, 24), and a PUR foam and/or a PIR foam is/are formed.

11. Process according to Claim 9 or 10, **characterized in that** the quantity of blowing agent added to the reaction mixtures (16, 17) to form the polyurethane sub-outer layers (13, 14) is smaller than the quantity of blowing agent added to the reaction mixture (18) to form the polyurethane foam core (12).

12. Process according to any of Claims 9 to 11, **characterized in that**
- before application of the foaming reaction mixture (16) to the first outer layer (10) to form the first polyurethane sub-outer layer (13) and/or
- before application of the foaming reaction mixture (17) to the second outer layer (11) to form the second polyurethane sub-outer layer (14), an adhesion-promoter layer (20) is applied to the at least one outer layer (10, 11).

13. Process according to any of Claims 9 to 12, **characterized in that**
- a glass-fibre material (27) is added to at least one of the sub-outer layers (13, 14) or the said layer is formed from a glass-fibre material (27).

## Revendications

1. Élément composite en sandwich (100), comprenant une première couche de recouvrement (10) et comprenant une deuxième couche de recouvrement (11), un corps de noyau de mousse en polyuréthane (12) étant agencé entre la première couche de recouvrement (10) et la deuxième couche de recouvrement (11), **caractérisé en ce que**
- une sous-couche de recouvrement (13, 14) pour le renfort mécanique de l'élément composite (100) est agencée entre le corps de noyau de mousse (12) et au moins une des couches de recouvrement (10, 11), le renfort étant obtenu par une action de support sur la couche de recouvrement (10, 11) en raison d'un module de lit plus élevé en comparaison d'une configuration sans sous-couche de recouvrement en polyuréthane (13, 14), **en ce que**
- l'au moins une sous-couche de recouvrement (10, 11) est formée en un polyuréthane, et la sous-couche de recouvrement en polyuréthane (13, 14) présente une densité massique (ρ2) plus élevée que la densité massique (ρ1) du corps de noyau de mousse en polyuréthane (12),
- l'au moins une sous-couche de recouvrement (13, 14) étant appliquée à partir d'un premier mélange réactionnel (16, 17) avec une première tête de mélange (24) et un râteau de coulée ou une tête de pulvérisation, séparément d'un deuxième mélange réactionnel (18) avec une deuxième tête de mélange (19) et un râteau de coulée ou une tête de pulvérisation pour la formation du corps de noyau de mousse en polyuréthane (12), et
- le mélange réactionnel (16, 17) pour la formation des sous-couches de recouvrement en polyuréthane (13, 14) étant moussé avec une quantité d'agent gonflant plus faible que le mélange réactionnel (18) pour la formation du corps de noyau de mousse en polyuréthane (12), et
- la sous-couche de recouvrement en polyuréthane (13, 14) présentant une épaisseur qui correspond à 3 % à 20 % de l'épaisseur de l'élément composite en sandwich (100), l'épaisseur de l'élément composite en sandwich (100) présentant une valeur de 30 mm à 250 mm.

2. Élément composite en sandwich (100) selon la revendication 1, **caractérisé en ce qu'**au moins une, et de préférence les deux sous-couches de recouvrement (10, 11) comprennent au moins en partie un matériau à base de fibres de verre, notamment un tricot de fibres de verre (27).

3. Élément composite en sandwich (100) selon la revendication 1 ou 2, **caractérisé en ce que** la première couche de recouvrement (10) et/ou la deuxième couche de recouvrement (11) sont formées en une bande métallique, notamment en une bande d'acier ou en une bande d'aluminium.

4. Élément composite en sandwich (100) selon l'une quelconque des revendications précédentes, **caractérisé en ce que** la densité massique (ρ1) du corps de noyau de mousse en polyuréthane (12) est de 30 kg/m³ à 60 kg/m³, de préférence de 35 kg/m³ à 50 kg/m³, et de manière particulièrement préférée de 40 kg/m³, la densité massique (p2) des sous-couches de recouvrement en polyuréthane (13, 14) étant de 60 kg/m³ à 140 kg/m³, de préférence de 80 kg/m³ à 120 kg/m³, et de manière particulièrement préférée de 100 kg/m³.

5. Élément composite en sandwich (100) selon l'une quelconque des revendications précédentes, **caractérisé en ce que** la densité massique (ρ2) des sous-couches de recouvrement en polyuréthane (13, 14) est de 1,5 fois à 4 fois, de préférence de 2 fois à 3 fois, et de manière particulièrement préférée de 2,5 fois, la densité massique (ρ1) du corps de noyau de mousse en polyuréthane (12).

6. Élément composite en sandwich (100) selon l'une quelconque des revendications précédentes, **caractérisé en ce que** les sous-couches de recouvrement en polyuréthane (13, 14) présentent une épaisseur respective qui correspond à 5 % à 15 %, et de préférence 10 %, de l'épaisseur de l'élément composite en sandwich (100), l'épaisseur de l'élément composite en sandwich (100) présentant une valeur de 80 mm à 120 mm, et de préférence de 100 mm.

7. Élément composite en sandwich (100) selon l'une quelconque des revendications précédentes, **caractérisé en ce que** le corps de noyau de mousse en polyuréthane (12) et les sous-couches de recouvrement en polyuréthane (13, 14) sont chacun formés en un mélange réactionnel moussant (16, 17, 18), et sont notamment préparés au moins à partir des composants de mélange rassemblés isocyanate et polyol, et forment de préférence un matériau de mousse dure en PUR et/ou PIR.

8. Élément composite en sandwich (100) selon l'une quelconque des revendications précédentes, **caractérisé en ce qu'**une couche de promoteur d'adhésion (20) est agencée entre les couches de recouvrement (10, 11) et les sous-couches de recouvrement en polyuréthane (13, 14) .

9. Procédé de fabrication d'un élément composite en sandwich (100) comprenant une première couche de recouvrement (10) et comprenant une deuxième couche de recouvrement (11), un corps de noyau de mousse en polyuréthane (12) étant agencé entre la première couche de recouvrement (10) et la deuxième couche de recouvrement (11), et les couches de recouvrement (10, 11) étant introduites en continu dans une unité de transport à double bande (15), le procédé comprenant au moins les étapes suivantes :
- l'application d'un mélange réactionnel moussant (16, 17) sur au moins une couche de recouvrement (10, 11) pour la formation d'une sous-couche de recouvrement augmentant la résistance (13, 14),
- l'application séparée d'un mélange réactionnel moussant (18) sur une sous-couche de recouvrement (13, 14) ou sur le côté intérieur d'une des couches de recouvrement (10, 11) afin de former le corps de noyau de mousse en polyuréthane (12),
- la sous-couche de recouvrement en polyuréthane (13, 14) étant configurée de telle sorte que celle-ci présente une épaisseur qui correspond à 3 % à 20 % de l'épaisseur de l'élément composite en sandwich (100), l'épaisseur de l'élément composite en sandwich (100) étant configurée avec une valeur de 30 mm à 250 mm.

10. Procédé selon la revendication 9, **caractérisé en ce que** l'au moins un mélange réactionnel (16, 17, 18) est formé par les composants de mélange isocyanate et polyol de préférence rassemblés avec une tête de mélange (19, 24), et une mousse de PUR et/ou PIR est formée.

11. Procédé selon la revendication 9 ou 10, **caractérisé en ce qu'**une quantité d'agent gonflant plus faible est ajoutée aux mélanges réactionnels (16, 17) pour la formation des sous-couches de recouvrement en polyuréthane (13, 14) que la quantité d'agent gonflant qui est ajoutée au mélange réactionnel (18) pour la formation du corps de noyau de mousse en polyuréthane (12) .

12. Procédé selon les revendications 9 à 11, **caractérisé en ce que**
- avant l'application du mélange réactionnel moussant (16) sur la première couche de recouvrement (10) pour la formation de la première sous-couche de recouvrement en polyuréthane (13) et/ou
- avant l'application du mélange réactionnel moussant (17) sur la deuxième couche de recouvrement (11) pour la formation de la deuxième sous-couche de recouvrement en polyuréthane (14), une couche de promoteur d'adhésion (20) est appliquée sur l'au moins une couche de recouvrement (10, 11).

13. Procédé selon les revendications 9 à 12, **caractérisé en ce que**
- un matériau à base de fibres de verre (27) est ajouté à au moins une des sous-couches de recouvrement (13, 14) ou celle-ci est formée en un matériau à base de fibres de verre (27).
